# EUROPEAN PATENT SPECIFICATION

(11) **EP 3 312 235 B1**
(45) Date of publication and mention of the grant of the patent: **30.10.2019**
(21) Application number: 16813953.3
(22) Date of filing: 21.06.2016
(51) Int. Cl.: B32B 25/04, B32B 1/08, B32B 25/10, B32B 25/16, B65G 15/34, C08L 7/00, C08L 9/06, C08K 3/04, C08K 3/26, C08L 21/00, C08L 61/06

(54) **RUBBER COMPOSITION, LAMINATE, AND CONVEYOR BELT**
GUMMIZUSAMMENSETZUNG, LAMINAT UND FÖRDERBAND
COMPOSITION DE CAOUTCHOUC, STRATIFIÉ, ET COURROIE TRANSPORTEUSE

(30) Priority: 22.06.2015 JP 2015125063
(43) Date of publication of application: 25.04.2018
(73) Proprietor: Bridgestone Corporation, Tokyo 104-8340 (JP)
(72) Inventor: TAKANO, Genho, Tokyo 104-8340 (JP); AKAMA, Shuyou, Tokyo 104-8340 (JP)
(74) Representative: Oxley, Robin John George
(86) International application number: PCT/JP2016/002980
(87) International publication number: WO 2016/208181

(56) References cited:
- EP-A1- 2 423 254
- EP-A2- 2 022 823
- WO-A1-2009/155747
- WO-A1-2014/122623
- GB-A- 1 079 909
- JP-A- 2009 040 815
- JP-A- 2009 292 960
- JP-A- 2011 057 374
- JP-A- 2014 141 618
- JP-A- 2014 152 002
- US-A- 4 167 540
- US-A1- 2012 234 452
- US-A1- 2013 139 940
- RAM CHARAN COMPANY: "Phenolic Resins for the Rubber Industry - An Overview.", RAM CHARAN PRODUCT DEVELOPMENT INFORMATION, vol. 2, no. 8, November 2012 (2012-11), pages 1-6, XP002779653, Chennai, India

## Description

### TECHNICAL FIELD

This disclosure, as claimed, relates to the use of a rubber composition and of a laminate comprising the composition for a conveyor belt. The claimed disclosure further relates to a conveyor belt comprising the laminate.

### BACKGROUND

For the purpose of reinforcing a rubber member to improve strength thereof, reinforcing members, including organic fibers such as polyethylene terephthalate and nylon, which is untreated or dipped with an adhesive component such as resorcin-formaldehyde-latex (RFL), etc. on its surface, and/or inorganic fibers such as steel cord, and the like, are used for rubber products required to have strength, such as tires for automobiles, conveyor belts, and hoses.

In manufacture of such rubber product, such reinforcing members and rubber members and/or such reinforcing members themselves are occasionally adhered to each other with an adhesive containing a rubber composition. For example, conveyor belts are frequently used as item transportation means in various industrial fields, and thus are required to have high durability capable of withstanding friction and impact with transported items. Therefore, they are manufactured by preparing one or more layers of reinforcing member, and cover rubbers as rubber members, laminating them via an adhesive containing a rubber composition such that the cover rubbers become upper and lower outermost layers, and then performing vulcanization molding. In such situation, in order to obtain high reinforcing effect, desired is a rubber composition capable of exhibiting high adhesiveness between the reinforcing members and high adhesiveness between the rubber members and the reinforcing members.

For example, in use of a conveyor belt, there are cases that after manufacture of one layered belt including a layer containing a rubber composition and a reinforcing member layer, a processing (the so-called endless processing) is performed to peel a part of the layers in both ends thereof, and to adhere the ends with an endless adhesive and/or an endless adhesive rubber, etc. The adhered both end portions (endless portion) are required to have high durability in actual use, and it is particularly important that the members in the endless portion, particularly the reinforcing members, are firmly adhered.

Here, from the viewpoint of the adhesiveness between rubber members using a rubber composition and reinforcing members, for example, JPH06-306211A (PTL1) discloses that a rubber manufacturable from a rubber composition containing 0.5 parts to 10 parts by mass of N,N'-m-phenylene bismaleimide, 0.3 parts to 3 parts by mass of a carboxylic acid which is divalent or more or an anhydride thereof, and 0.3 to 10 parts by mass of a compound generating formaldehyde when heated per 100 parts by mass of a rubber such as natural rubber and styrene butadiene rubber has excellent vulcanization molding performance with reinforcing members.

### CITATION LIST

### Patent Literature

PTL1: JPH06-306211A

### SUMMARY

### (Technical Problem)

However, as a result of study, we discovered that there is a problem that even if the aforementioned conventional rubber composition is adhered to reinforcing members, its adhesiveness is deteriorated because of environmental degradation of the reinforcing members due to transportation process, storage process, manufacture process, etc. In particular, we discovered as well that in the case of manufacturing a layered belt by laminating a plurality of layers containing the aforementioned conventional rubber composition and one or more of the reinforcing member layers, when its endless portion is peeled, its peel strength becomes insufficient, and an amount of the rubber composition remaining on the reinforcing members is small. Therefore, there is a risk that the reinforcing members are not adhered to each other firmly enough, and are incapable of bringing high durability to the conveyor belt, which leaves room for improving such rubber composition.

Then, this disclosure aims to provide a rubber composition having excellent adhesiveness with reinforcing members, particularly reinforcing members in environmental degradation. Moreover, this disclosure aims to provide a laminate using the aforementioned rubber composition and capable of improving durability of a rubber product, and a conveyor belt using the aforementioned laminate and having high durability.

### (Solution to Problem)

As a result of intensive study in order to achieve the aforementioned purpose, we discovered that by compounding a specific compound at a specific amount to a rubber component containing a diene based rubber, it is possible to obtain a rubber composition having excellent adhesiveness with reinforcing members, particularly reinforcing members in environmental degradation.

The rubber composition of this disclosure is a rubber composition obtainable by compounding a rubber component containing a diene based rubber, a phenol based resin, a carbon black, and calcium carbonate, wherein:
the compounding amount of the phenol based resin is 3 parts by mass or more per 100 parts by mass of the diene based rubber, and the compounding amount of the calcium carbonate is 10 parts by mass or more and 120 parts by mass or less per 100 parts by mass of the diene based rubber. Such rubber composition has excellent adhesiveness with reinforcing members, particularly reinforcing members in environmental degradation.

In the rubber composition of this disclosure, it is preferable that the compounding amount of the phenol based resin is 3 parts by mass or more and 15 parts by mass or less per 100 parts by mass of the diene based rubber. By setting the compounding amount of the phenol based resin within the aforementioned range, it is possible to maintain high adhesiveness with undegraded reinforcing members, and to simultaneously suppress reduction of productivity of a rubber product using such rubber composition.

In the rubber composition of this disclosure, it is preferable that the phenol based resin is an alkylphenol-formaldehyde based resin having an alkyl group with 5 or more carbon atoms on an aromatic ring. Thereby, it is possible to further improve the adhesiveness with reinforcing members in environmental degradation.

In the rubber composition of this disclosure, it is preferable that the alkylphenol-formaldehyde based resin has the alkyl group at a para position with respect to a hydroxyl group. Thereby, it is possible to obtain a polarity capable of effectively improving the adhesiveness with reinforcing members in environmental degradation.

In the rubber composition of this disclosure, the compounding amount of the calcium carbonate is 10 parts by mass or more and 120 parts by mass or less per 100 parts by mass of the diene based rubber. Thereby, it is possible to suppress deterioration of the operability when peeling the rubber composition and reinforcing members, and to suppress deterioration of the peel strength between the rubber composition and reinforcing members.

In the rubber composition of this disclosure, it is preferable that the rubber component contains a natural rubber and a styrene-butadiene rubber. Thereby, it is possible to obtain a rubber composition with improved adhesiveness with reinforcing members.

In the rubber composition of this disclosure, it is preferable that a ratio of a compounding amount of the natural rubber to a total compounding amount of the natural rubber and the styrene-butadiene rubber is 20 mass% or more and 60 mass% or less. Thereby, it is possible to improve mechanical strength, wear resistance, film thickness stability, aging resistance and flex cracking resistance of a rubber member or rubber product using the obtained rubber composition.

In the rubber composition of this disclosure, it is preferable that a nitrogen adsorption BET specific surface area of the carbon black is 8 m²/g or more and 100 m²/g or less. By setting the nitrogen adsorption BET specific surface area of the carbon black within this range, it is possible to improve the peel strength of the rubber composition and the reinforcing members, particularly reinforcing members in environmental degradation, and on the other hand, it is possible to sufficiently suppress deterioration of the peel operability, and to simultaneously obtain sufficient productivity such as scattering resistance and rollability during manufacture.

It is preferable that the rubber composition of this disclosure is arranged between a rubber member and a reinforcing member, or between reinforcing members, and is used to adhere the same. Thereby, it is possible to firmly adhere the rubber and the reinforcing member, and/or the reinforcing members.

Note that the "rubber member" in this disclosure refers to any member containing at least a rubber component used in manufacture of a rubber product.

The laminate of this disclosure is obtainable by stacking and adhering a layer containing the rubber composition of this disclosure and a reinforcing member layer. Such laminate has the layer containing the rubber composition and the reinforcing member layer firmly adhered to each other, and is capable of improving durability of a rubber product.

The conveyor belt of this disclosure contains the laminate of this disclosure. Such conveyor belt has a layer containing the rubber composition and a reinforcing member layer firmly adhered to each other, and thus has high durability.

### (Advantageous Effect)

According to this disclosure, it is possible to provide a rubber composition having excellent adhesiveness with reinforcing members, particularly reinforcing members in environmental degradation. Moreover, according to this disclosure, it is possible to provide a laminate using the aforementioned rubber composition and capable of improving durability of a rubber product, and a conveyor belt using the aforementioned laminate and having high durability.

### BRIEF DESCRIPTION OF THE DRAWINGS

FIG. 1 schematically illustrates a peeled surface in a peel test of a layer containing the rubber composition of this disclosure and a reinforcing member layer; and
FIG. 2 schematically illustrates a peeled surface in a peel test of a layer containing a rubber composition of a comparative example and a reinforcing member layer.

### DETAILED DESCRIPTION

### <Rubber composition>

The following describes one of the disclosed embodiments in detail.

The rubber composition of this disclosure is obtainable by compounding at least a rubber component containing a diene based rubber, a phenol based resin, a carbon black, optionally a calcium carbonate, and further compounding other components if necessary.

### (Rubber component)

The rubber composition of this disclosure necessarily uses a diene based rubber as a rubber component. The diene based rubber is capable of exhibiting performances such as high elasticity and high heat resistance via vulcanization. The diene based rubber is not specifically limited and may be appropriately selected depending on the purpose. Examples include natural rubber (NR); and diene based synthetic rubbers such as butadiene rubber (BR), styrene-butadiene rubber (SBR), isoprene rubber (IR), chloroprene rubber (CR), ethylene-propylene-diene rubber (EPDM), acrylonitrile-butadiene rubber (NBR) and butyl rubber (IIR). These may be used singly or in a combination of two or more.

In particular, from the viewpoint of improving the adhesiveness with reinforcing members, it is preferable that the rubber composition of this disclosure contains a natural rubber and a styrene-butadiene rubber.

The ratio of the diene based rubber in the rubber component of the rubber composition of this disclosure is not specifically limited and may be appropriately selected depending on the purpose, but is preferably 80 mass% or more, more preferably 90 mass% or more, particularly preferably 100 mass%. By setting the ratio of the diene based rubber in the rubber component to 80 mass% or more, the adhesiveness of the obtained rubber composition and reinforcing members is improved, and it is possible to improve durability of a rubber product using a laminate of a layer containing the rubber composition and a reinforcing member layer.

Note that in the case of using both a natural rubber and a styrene-butadiene rubber as the diene based rubber, the ratio of the compounding amount of the natural rubber to the total compounding amount of the natural rubber and the styrene-butadiene rubber is preferably 20 mass% or more, and preferably 60 mass% or less. By setting the ratio of the compounding amount of the natural rubber to 20 mass% or more, it is possible to improve the mechanical strength of a rubber member or rubber product using the obtained rubber composition, and on the other hand, by setting the same to 60 mass% or less, it is possible to improve the wear resistance and the film thickness stability of a rubber member or rubber product using the obtained rubber composition. From the same viewpoint, the ratio of the compounding amount of the natural rubber to the total compounding amount of the natural rubber and the styrene-butadiene rubber is more preferably 30 mass% or more, and more preferably 50 mass% or less.

Moreover, in the case of using both a natural rubber and a styrene-butadiene rubber as the diene based rubber, the ratio of the compounding amount of the styrene-butadiene rubber to the total compounding amount of the natural rubber and the styrene-butadiene rubber is preferably 40 mass% or more, and preferably 80 mass% or less. By setting the ratio of the compounding amount of the styrene-butadiene rubber to 40 mass% or more, it is possible to improve the aging resistance of a rubber member or rubber product using the obtained rubber composition, and on the other hand, by setting the same to 80 mass% or less, it is possible to improve the flex cracking resistance of a rubber member or rubber product using the obtained rubber composition. From the same viewpoint, the ratio of the compounding amount of the styrene-butadiene rubber to the total compounding amount of the natural rubber and the styrene-butadiene rubber is more preferably 50 mass% or more, and more preferably 70 mass% or less.

Note that other than the diene based rubber, the rubber composition of this disclosure may also contain a non-diene based rubber (a rubber component other than diene based rubber) as the rubber component, and may use a non-diene based rubber ordinarily used in rubber products without being specifically limited.

Moreover, in the rubber composition of this disclosure, a reclaimed rubber containing a diene based rubber and optionally a non-diene based rubber may be used. In the case of using a reclaimed rubber in the rubber composition of this disclosure, regarding its compounding amount, from the viewpoint of sufficiently ensuring quality of a rubber product using the obtained rubber composition, it is preferable that a polymer component in the reclaimed rubber is 20 mass% or less with respect to a total amount of compounded polymers.

### (Phenol based resin)

A phenol based resin is necessarily used in the rubber composition of this disclosure. By using the phenol based resin in the rubber composition, it is possible to improve the adhesiveness of the rubber composition and reinforcing members such as organic fibers, particularly reinforcing members in environmental degradation. The reason has not been clarified, but it is considered that the unique high polarity of the phenol based resin contributes to improvement of the adhesiveness. Note that the phenol based resin may be used singly or in a combination of two or more.

Moreover, in the present embodiment, the "phenol based resin" refers to not only a polycondensate using only a phenol as one raw material, but also phenol resins in a wide range inclusive of a polycondensate using phenols such as cresols and xylenols as one raw material.

Here, the phenol based resin is not specifically limited and may be appropriately selected depending on the purpose. Examples include an alkylphenol-formaldehyde based resin, a rosin modified product of an alkylphenol-formaldehyde based resin, an alkylphenol-acetylene based resin, a modified alkylphenol resin, and a terpene phenol based resin. Among these, the phenol based resin is preferably an alkylphenol-formaldehyde based resin, more preferably an alkylphenol-formaldehyde based resin having an alkyl group with 5 or more carbon atoms on an aromatic ring. By using the aforementioned alkylphenol-formaldehyde based resin in the rubber composition of this disclosure, it is possible to further improve the adhesiveness with reinforcing members in environmental degradation.

It is more preferable that the aforementioned alkylphenol-formaldehyde based resin has an alkyl group with 5 or more carbon atoms at a para position with respect to a hydroxyl group. Thereby, it is possible to obtain a polarity capable of effectively improving the adhesiveness with reinforcing members in environmental degradation, and to bring stable film thickness stability.

Specific examples of such alkylphenol-formaldehyde based resin include p-tert-octylphenol-formaldehyde resin.

The compounding amount of the phenol based resin in the rubber composition of this disclosure is not specifically limited as long as it is 3 parts by mass or more per 100 parts by mass of the diene based rubber, but is preferably 3 parts by mass or more and 15 parts by mass or less. If the compounding amount of the phenol based resin in the rubber composition is less than 3 parts by mass per 100 parts by mass of the diene based rubber, there is a risk that the improvement effect of the adhesiveness to reinforcing members, particularly reinforcing members degraded due to exposure to atmosphere, obtained by the compounded phenol based resin is insufficient. On the other hand, by setting the compounding amount of the phenol based resin in the rubber composition to 3 parts by mass or more per 100 parts by mass of the diene based rubber, it is possible to obtain a rubber composition with sufficiently high adhesiveness with reinforcing members, particularly reinforcing members degraded due to exposure to atmosphere, due to compound of the chlorinated paraffin. Moreover, by setting the compounding amount of the phenol based resin in the rubber composition to 15 parts by mass or less per 100 parts by mass of the diene based rubber, it is possible to maintain high adhesiveness with undegraded reinforcing members, and to simultaneously suppress reduction of the productivity of a rubber product using such rubber composition due to excessively long time for vulcanization. From the same viewpoint, the compounding amount of the phenol based resin in the rubber composition is more preferably 3 parts by mass or more and 10 parts by mass or less.

### (Carbon black)

The rubber composition of this disclosure necessarily uses a carbon black. The carbon black, as a reinforcing filler, has a function of improving the modulus and the wear resistance of the rubber composition, and appropriately improving the peel strength of this rubber composition and reinforcing members (the adhesiveness of this rubber composition and reinforcing members), particularly reinforcing members in environmental degradation. The carbon black may be used singly or in a combination of two or more.

The nitrogen adsorption BET specific surface area (N₂SA) of the carbon black used in the rubber composition of this disclosure is not specifically limited and may be appropriately selected depending on the purpose, but is preferably 8 m²/g or more, and preferably 100 m²/g or less. By setting the nitrogen adsorption BET specific surface area of the carbon black to 8 m²/g or more, it is possible to ensure the peel strength between the rubber composition and reinforcing members, particularly reinforcing member in environmental degradation, and to ensure sufficient reinforcement performance. Moreover, by setting the nitrogen adsorption BET specific surface area of the carbon black to 100 m²/g or less, it is possible to sufficiently suppress deterioration of the peel operability when peeling a layer containing this rubber composition and a reinforcing member layer, obtain sufficient productivity such as scattering resistance and reliability during manufacture, and simultaneously ensure high dispersibility in the rubber composition during kneading. From the same viewpoint, the nitrogen adsorption BET specific surface area of the carbon black is more preferably 25 m²/g or more, and more preferably 90 m²/g or less.

Note that the nitrogen adsorption BET specific surface area of the carbon black may be measured with, for example, a conventionally well-known method.

The compounding amount of the carbon black in the rubber composition of this disclosure is not specifically limited and may be appropriately selected depending on the purpose, but is preferably 10 parts by mass or more and preferably 100 parts by mass or less per 100 parts by mass of the diene based rubber. By setting the compounding amount of the carbon black in the rubber composition to 10 parts by mass or more per 100 parts by mass of the diene based rubber, it is possible to improve the peel strength between this rubber composition and reinforcing members, particularly reinforcing members in environmental degradation. Moreover, by setting the compounding amount of the carbon black in the rubber composition to 100 parts by mass or less per 100 parts by mass of the diene based rubber, it is possible to suppress deterioration of the operability when peeling a layer containing this rubber composition and a reinforcing member layer, for example, during endless processing of the conveyor belt. From the same viewpoint, the compounding amount of the carbon black in the rubber composition is more preferably 30 parts by mass or more, and more preferably 50 parts by mass or less per 100 parts by mass of the diene based rubber.

### (Calcium carbonate)

The rubber composition of this disclosure further uses a calcium carbonate. The calcium carbonate has a function reducing breaking resistance of the rubber composition to thereby improve the adhesiveness of the rubber composition with reinforcing members such as organic fibers and other rubber members, and has a function improving the peel operability of the rubber composition and the reinforcing member. The calcium carbonate may be used singly or in a combination of two or more.

The compounding amount of the calcium carbonate in the rubber composition of this disclosure is 10 parts by mass or more, and 120 parts by mass or less per 100 parts by mass of the diene based rubber. By setting the compounding amount of the calcium carbonate in the rubber composition to 10 parts by mass or more per 100 parts by mass of the diene based rubber, it is possible to suppress cost increase of the rubber composition, to suppress deterioration of the operability due to close contact with a bumbary, a roll, etc. caused by excessively low viscosity of unvulcanized rubber composition, and to bring stable film thickness stability. Moreover, it is possible to suppress deterioration of the operability when peeling the rubber composition and the reinforcing member due to excessively high cohesion tearing force of the rubber composition. Moreover, by setting the compounding amount of the calcium carbonate in the rubber composition to 120 parts by mass or less per 100 parts by mass of the diene based rubber, it is possible to suppress deterioration of the peel strength between the rubber composition and reinforcing members due to excessive decrease of a cohesion tearing force of the rubber composition, to suppress deterioration of the productivity due to floating of unvulcanized rubber composition from a roll during rolling which uses a roll and insufficient shearing heat, and to sufficiently raise the dispersity in the rubber composition during kneading using a Banbury mixer, a Brabender mixer, a kneader, etc. From the same viewpoint, the compounding amount of the calcium carbonate in the rubber composition is preferably 20 parts by mass or more, more preferably more than 40 parts by mass, and preferably 100 parts by mass or less, more preferably 90 parts by mass or less.

The average primary particle size of the calcium carbonate used in the rubber composition of this disclosure is not specifically limited and may be appropriately selected depending on the purpose, but is preferably 0.5 µm or more. By setting the average primary particle size of the calcium carbonate to 0.5 µm or more, it is possible to sufficiently improve the adhesiveness between the rubber composition and reinforcing members, particularly reinforcing members in environmental degradation.

Moreover, the average primary particle size of the calcium carbonate is more preferably 0.8 µm or more, and more preferably 13 µm or less. By setting the average primary particle size of the calcium carbonate to 0.8 µm or more, it is possible to suppress rise of the viscosity of unvulcanized rubber composition, and to bring stable film thickness stability. Moreover, by setting the same to 13 µm or less, it is possible to suppress deterioration of the modulus and the tear strength of vulcanized rubber composition, and to obtain stable reinforcing effect. From the same viewpoint, the average primary particle size of the calcium carbonate is more preferably 1.0 µm or more, further more preferably 2.0 µm or more, and more preferably 12.0 µm or less.

Note that the average primary particle size of the calcium carbonate may be measured by, for example, observing with a scanning electron microscope.

Note that the calcium carbonate used in the rubber composition of this disclosure aims to bring excellent dispersity in the rubber composition, and thus a calcium carbonate subjected to surface treatment by using an organic material if necessary.

### (Other components)

In the rubber composition of this disclosure, other than the aforementioned rubber component, phenol based resin and carbon black, compounding ingredients ordinarily used in the rubber industry, for example, a vulcanizing agent such as sulfur, a vulcanization accelerator, a vulcanization accelerator aid such as zinc oxide, a softener, an age resistor, an antiscorching agent, a processing aid, a lubricant, a filler other than carbon black and calcium carbonate, a filler modifier, a tackifier, a colorant, etc. may be used appropriately depending on the purpose.

Note that in the case of using sulfur as a vulcanizing agent to the rubber composition of this disclosure, from the viewpoint of effectively vulcanization at a minimum necessary amount, its compounding amount is preferably 1.5 parts by mass or more and 3 parts by mass or less per 100 parts by mass of the diene based rubber.

### (Preparation of rubber composition)

The rubber composition of this disclosure may be prepared by, for example, kneading the aforementioned components by using a Banbury mixer, a Brabender mixer, a kneader, etc.

A rubber composition prepared in this way has the following features. Namely, in the case of adhering such rubber composition and reinforcing members, particularly reinforcing members in environmental degradation, and then peeling the same, it is possible to obtain high peel strength. Moreover, in the case of adhering such rubber composition and reinforcing members, particularly reinforcing members in environmental degradation, and then peeling the same, the amount of the rubber composition remaining on the reinforcing members is more. Further, due to these features, the rubber composition of this disclosure can be said as having excellent adhesiveness to reinforcing members such as organic fibers, particularly reinforcing members in environmental degradation, and is therefore used in manufacture of conveyor belts. Specifically, when manufacturing a rubber product, it is possible to arrange this rubber composition between reinforcing members, or between rubber members and reinforcing members, to firmly adhere these members. In other words, the rubber composition of this disclosure may be used as an adhesive rubber composition. This rubber composition may be used, for example, to a conveyor belt in a layered shape, by laminating with reinforcing member layers. Furthermore, during endless processing of such conveyor belt, after peeling reinforcing members or rubber members and reinforcing members adhered by the aforementioned rubber composition, and then re-adhering these by using a rubber for endless adhesion, it is possible to perform firm adhesion.

### <Laminate>

The laminate of this disclosure is obtainable by stacking and adhering at least a layer containing the rubber composition of this disclosure (hereinafter also referred to as "the present rubber composition layer") and a reinforcing member layer. In other words, the laminate of this disclosure is obtainable by stacking and adhering the present rubber composition layer and the reinforcing member layer. Note that the laminate of this disclosure is inclusive of a laminate obtainable by alternately stacking and adhering a plurality of the present rubber composition layers and one or a plurality of the reinforcing member layers, and is also inclusive of a laminate obtainable by laminating and adhering the present rubber composition layer on both sides of a reinforcing member layer, and further laminating two or more of a product obtained thereby. Moreover, in addition to a layer containing the rubber composition of this disclosure, the laminate of this disclosure may also include a rubber layer other than a layer containing the rubber composition of this disclosure.

### (The present rubber composition layer)

The present rubber composition layer may be one obtainable by shaping the aforementioned rubber composition of this disclosure into a sheet-like shape by using an apparatus such as a rolling roll and an extruder.

The thickness of the present rubber composition layer is not specifically limited and may be appropriately selected depending on the purpose, but from the viewpoint of suppression of rubber breakage during molding, and thinning, is preferably 0.2 mm or more and 2 mm or less. Note that in the case of using a plurality of the present rubber composition layers, thickness of each present rubber composition layer may be either identical or different.

### (Reinforcing member layer)

The reinforcing member layer has a function improving the reinforcement performance of conveyor belts as rubber products. Here, the reinforcing member layer is not particularly limited and may be appropriately selected depending on the purpose. Note that the reinforcing member layer as an adhesion target of the present rubber composition layer is particularly preferably a layer including an organic fiber (hereinafter also referred to as "organic fiber layer"), more preferably a canvas layer formed of an organic fiber. Note that the "canvas" in the present Specification refers to a textile obtained by weaving fibers.

The material of the organic fiber is not specifically limited and may be appropriately selected depending on the purpose. Examples include fibers formed of aliphatic polyamides such as nylon; aromatic polyamides such as Kevlar; polyesters such as polyethylene terephthalate, polyethylene naphthalate, polyethylene succinate and polymethyl methacrylate; syndiotactic-1,2-polybutadiene; acrylonitrile-butadiene-styrene copolymer; polystyrene; and copolymers thereof. These may be used singly or in a combination of two or more. For example, in the case of using a canvas formed of an organic fiber as the reinforcing member layer, warp and woof yarns of the canvas may be formed of different materials.

Note that the reinforcing member layer may be an untreated organic fiber layer, but from the viewpoint of improving of the adhesiveness of the present rubber composition layer and the reinforcing member layer, is preferably one including on at least a part of its surface, for example, its entire surface, a film containing resorcinol, formaldehyde, a condensate of resorcinol and formaldehyde, and a latex (hereinafter also referred to as "RFL film").

The RFL film may be obtained by, for example, before stacking with the present rubber composition layer, immersing at least a part of the organic fiber, for example, the entire organic fiber, in a liquid containing resorcinol, formaldehyde, a partial condensate of resorcinol and formaldehyde, and a latex (hereinafter also referred to as "RFL dispersion"), and subjecting the same to heat treatment. Moreover, the partial condensate of resorcinol and formaldehyde may be obtained via resolification reaction. From the viewpoint of improving the adhesiveness of the present rubber composition layer and the reinforcing member layer, examples of the latex contained in the RFL dispersion include vinyl pyridine latex, styrene-butadiene copolymer latex (SBR latex), natural rubber latex, acrylate copolymer based latex, butyl rubber latex, nitrile rubber latex, and chloroprene latex. These may be used singly or in a combination of two or more.

Moreover, when preparing the RFL dispersion, reaction catalysts such as acids and alkalis may be used together if necessary.

Note that a mass ratio of the resorcinol, the formaldehyde, the partial condensate of resorcinol and formaldehyde, and the latex in the RFL dispersion is not specifically limited.

Specifically, the RFL film may be obtained by immersing a part or an entire organic fiber such as a canvas in the aforementioned RFL dispersion, removing extra attached liquid by passing the same between rolls or performing vacuum suction if necessary, and then performing one-phase or multiphase heat treatment.

Here, in order to accelerate the reaction and to reduce heat shrinkage in actual use, a final treatment temperature in the heat treatment is preferably 180°C or higher, particularly preferably 200°C or higher.

### (Rubber layer other than present rubber composition layer)

Moreover, the laminate of this disclosure may include a rubber layer other than the present rubber composition layer on at least one outermost layer depending on the requirement of the desired rubber product. For example, in the case of using the laminate of this disclosure to a conveyor belt, the laminate may include on an outermost layer a rubber layer capable of functioning as a cover rubber. Here, the rubber layer capable of functioning as a cover rubber is not specifically limited. Examples include ones obtained by appropriately kneading: a polymer component containing a natural rubber (NR), a butadiene rubber (BR), a styrene-butadiene rubber (SBR), an isoprene rubber (IR), a chloroprene rubber (CR), an ethylene-propylene-dine rubber (EPDM), an acrylonitrile-butadiene rubber (NBR), a butyl rubber (IIR), etc., or a mixture thereof; and a vulcanizing agent such as sulfur, a vulcanization accelerator, a vulcanization accelerator aid such as zinc oxide, a softener, an age resistor, an antiscorching agent, a processing aid, a lubricant, a carbon black, a silica, calcium carbonate, a filler modifier, a tackifier, a colorant, etc. depending on the purpose. Note that examples of the cover rubber include an upper cover rubber and a lower cover rubber, which may be rubber members of either the same type or different types.

Moreover, in the case where the laminate of this disclosure includes on an outermost layer a rubber layer other than the present rubber composition layer, it is preferable that such rubber layer is adjacent on its inner side to the present rubber composition layer.

### (Preparation of laminate)

The method for stacking the present rubber composition layer, the reinforcing member layer, and optionally the rubber layer other than the present rubber composition is not specifically limited, and an ordinary method may be used for stacking.

Here, in the case of stacking with a conventionally known calendering process by using the present rubber composition layer and the reinforcing member layer, it is possible to first manufacture a laminate A including rubber composition layer-reinforcing member layer-rubber composition layer, and directly use this laminate A, or alternatively, use a laminate B obtained by overlapping two or more laminates A depending on necessary properties of the rubber product such as conveyor belt (namely, in the case of using two overlapped laminates A, obtained is a laminate B including [rubber composition layer-reinforcing member layer-rubber composition layer-rubber composition layer-reinforcing member layer-rubber composition layer]). Furthermore, for example, in manufacture of the conveyor belt, by stacking the aforementioned rubber layer capable of functioning as a cover rubber to an outermost surface of the laminate A or the laminate B with an ordinary method, it is possible to prepare the laminate of this disclosure. Note that examples of the aforementioned laminate B used in manufacture of the conveyor belt include one obtained by overlapping 2 to 8 laminates A.

Moreover, the method for adhering the stacked present rubber composition layer and reinforcing member layer, and optionally the present rubber composition layer and the rubber layer other than the present rubber composition layer, is not specifically limited. Examples include arranging the stacked rubber composition layer and reinforcing member layer, and optionally the rubber layer other than the present rubber composition layer, in a predetermined mold, and adhering via vulcanization (the so-called vulcanization molding).

The temperature of vulcanization is not specifically limited and may be appropriately selected depending on the purpose, but from the viewpoint of sufficiently adhering the present rubber composition layer and the reinforcing member layer, and simultaneously suppressing overvulcanization, is preferably 130°C to 170°C. Moreover, the vulcanization time is not specifically limited, but is preferably set appropriately so that the present rubber composition layer and the reinforcing member layer are sufficiently adhered, and heat is sufficiently conducted to a center of the laminate so as to perform vulcanization.

The laminate prepared in this way has the present rubber composition layer and the reinforcing member layer, and optionally the present rubber composition layer and the rubber layer other than the present rubber composition layer, firmly adhered to each other, and thus is capable of improving the durability of a rubber product when used as a member of the rubber product, and is therefore used as a member of conveyor belts being rubber products required to have high durability.

### <Conveyor belt>

The conveyor belt of this disclosure contains the aforementioned laminate of this disclosure. The conveyor belt of this disclosure is not specifically limited as long as it uses the laminate of this disclosure.

As mentioned above, in the conveyor belt of this disclosure, the present rubber composition layer and the reinforcing member, and optionally the present rubber composition layer and the rubber layer other than the present rubber composition layer, are firmly adhered to each other, and thus the conveyor belt of this disclosure has high durability. Moreover, for the same reason, the conveyor belt of this disclosure has high reinforcement performance as well.

### EXAMPLES

The following describes the presently disclosed tire in more detail through examples. However, the presently disclosed tire is not in any way limited by the following examples and suitable alterations may be made that do not change the essence thereof.

### <Preparation of rubber composition>

By using a Banbury mixer, a processing aid, a lubricant, sulfur, a vulcanization accelerator and zinc oxide were added into the formulation as listed in Tables 1 and 2 (unit: parts by mass) at an amount selected according to an ordinary method, to prepare an unvulcanized rubber composition.

Regarding the prepared unvulcanized rubber composition, evaluation of vulcanization time and film thickness stability was performed according to the following procedure.

### (Measurement of 90% vulcanization time)

A block-shaped unvulcanized rubber composition cut into a weight of 8±1 g was used as a sample. By using this sample, its 90% vulcanization time (tc(90)) at 155°C was determined with a Curelastometer ("CURELASTOMETER7", manufactured by JSR corporation) according to JIS K6300-2 and ISO6502.

### (Evaluation of film thickness stability)

An unvulcanized rubber composition in a sheet-like shape with a thickness of 0.7 mm, which was manufactured by using a 6-inch diameter rolling roll (corresponding to the following rubber composition layer mentioned below), was shaped into a shape with a width of 25 cm to 30 cm and a length of 40 cm to 100 cm as a sample. After drawing a square block which is 20 cm on each side centering on a center of this sheet-like sample, each thickness at each apex, midpoints of each side and a central point (9 points in total) of this square block was measured by using a digital thickness gauge ("SMD-550S2-LW", manufactured by Teclock Corporation). Then, differences between maximum values and minimum values of the thickness at the aforementioned 9 points were calculated and evaluated according to the following standard.

Difference between maximum value and minimum value of thickness is less than 0.04 mm ... excellent
Difference between maximum value and minimum value of thickness is 0.04 mm or more and less than 0.07 mm ... good
Difference between maximum value and minimum value of thickness is 0.07 mm or more ... poor

### <Preparation of reinforcing member layer>

A canvas including warp yarns formed of polyethylene terephthalate (number of twist: 16 T/10cm, number of yarn: 83/5cm) and woof yarns formed of nylon (number of twist: 12 T/10cm, number of yarn: 32/5cm) was prepared. On the other hand, by sequentially mixing and stirring resorcinol, formalin, water and an alkaline reaction catalyst, partially performing condensation reaction of resorcinol and formaldehyde, and then mixing and stirring an SBR latex, a vinyl pyridine latex and water, the RFL dispersion was prepared. Then, the entire canvas mentioned above was immersed in the obtained RFL dispersion. The immersed canvas was subjected to drying and heat treatment until a final treatment temperature fell within a range of 210°C to 240°C, and an "undegraded reinforcing member layer" including an RFL film on its surface was obtained. Note that when forming the RFL film in the undegraded reinforcing member layer, the RFL dispersion was adjusted until a latex concentration in terms of the SBR latex and the vinyl pyridine latex in the RFL film in total became 83 mass%.

Further, an undegraded reinforcing member layer the same as the above was prepared, and was left standing for 60 minutes in an ozone tank at 40°C and an ozone concentration of 50 pphm, to obtain a "degraded reinforcing member layer".

### <Preparation of laminate sample>

By using the aforementioned unvulcanized rubber composition, a rubber composition layer with a thickness of 0.7 mm was manufactured with a 6-inch diameter rolling roll. Next, by using this rubber composition layer and the aforementioned reinforcing member layer, an unvulcanized laminate sample of a 7-layer structure of [rubber composition layer A-undegraded reinforcing member layer-rubber composition layer B-undegraded reinforcing member layer-rubber composition layer C-undegraded reinforcing member layer-rubber composition layer D] was prepared. This unvulcanized laminate sample was vulcanized in a predetermined mold at 148°C for a time 1.5 times to the t_{c}(90) determined as mentioned above, left along for one night at room temperature, to obtain a vulcanized laminate sample I.

Moreover, with the same method as mentioned below, an unvulcanized laminate sample of a 7-layer structure of [rubber composition layer A-degraded reinforcing member layer-rubber composition layer B-degraded reinforcing member layer-rubber composition layer C-degraded reinforcing member layer-rubber composition layer D] was prepared, to obtain a vulcanized laminate sample II with the same method as mentioned above.

Note that the aforementioned rubber composition layers A to D were prepared from the same type of rubber composition.

By using these laminate samples I, II, the adhesiveness of the rubber composition layers and the reinforcing member layers was evaluated according to the following procedure.

### (Peel test of rubber composition layer and reinforcing member layer)

The aforementioned laminate sample was cut into a width of 25 mm in a warp direction, and then cuts of 10 mm to 20 mm were opened with a knife on a part of the rubber composition layer B. A test peeling was performed from the cut portions by using an "Auto Rubber Universal Testing Machin AC-10kN" manufactured by TSE Corporation. Here, a peel strength in this test (N/25mm) was measured at a peel angle of 90° and a peel speed of 50 mm/min. Then, the adhesiveness and the peel operability of the laminate samples I and II were evaluated according to the following. Tables 1 and 2 list the results of this evaluation.

### -Evaluation of adhesiveness-

Larger than 100 N/25mm ... excellent
100 to 80 N/25mm ... good
Smaller than 80 N/25mm ... poor

### -Evaluation of peel operability-

300 N/25mm or less ... excellent
Larger than 300 N/25mm ... poor

A rubber amount remaining on the reinforcing member layer after this test (rubber attachment amount) was evaluated according to the method described below. Namely, among the two reinforcing member layers adjacent the peeled rubber composition layer B, with respect to a reinforcing member layer which is judged by observing as having a smaller rubber attachment amount, its rubber attachment surface was imaged as a sample photo. Next, the imaged sample photo was subjected to image thresholding into a rubber component and a reinforcing member layer component and area calculation with an image processing software, where the case in which the rubber remained in an area larger than 60% was evaluated as excellent, the case in which the rubber remained in an area of 60% to 40% as good, and the case in which the rubber remained in an area smaller than 40% as poor. Tables 1 and 2 list the results of this evaluation.

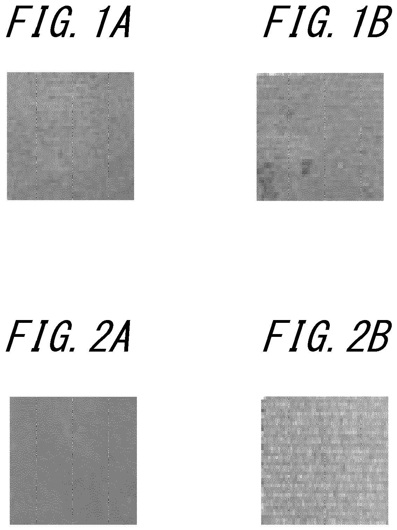

For reference, FIG. 1A illustrates a schematic view of a peeled surface in a test using the laminate sample I of Example 1, and FIG. 1B illustrates a schematic view of a peeled surface in a test using the laminate sample II of Example 1. Similarly, FIG. 2A illustrates a schematic view of a peeled surface in a test using the laminate sample I of Comparative Example 2, and FIG. 2B illustrates a schematic view of a peeled surface in a test using the laminate sample II of Comparative Example 2. Here, a darker color of the peeled surface indicates that more rubber composition remained, and indicates excellent adhesiveness without occurrence of interfacial peeling between the rubber composition layer and the reinforcing member layer.

**[Table 1]**

| | | Comparative example 1 | Comparative example 2 | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|
| Natural rubber | | 35 | 35 | 35 | 35 | 35 | 35 | 35 | 35 | 35 | 35 | 35 | 35 | 35 | 35 |
| Styrene-butadiene rubber | | 60 | 60 | 60 | 60 | 60 | 60 | 60 | 60 | 60 | 60 | 60 | 60 | 60 | 60 |
| Reclaimed rubber *1 | Isoprene rubber | 5 | 5 | 5 | 5 | 5 | 5 | 5 | 5 | 5 | 5 | 5 | 5 | 5 | 5 |
| | Carbon black | 2.5 | 2.5 | 2.5 | 2.5 | 2.5 | 2.5 | 2.5 | 2.5 | 2.5 | 2.5 | 2.5 | 2.5 | 2.5 | 2.5 |
| | Others | 2.5 | 2.5 | 2.5 | 2.5 | 2.5 | 2.5 | 2.5 | 2.5 | 2.5 | 2.5 | 2.5 | 2.5 | 2.5 | 2.5 |
| Calcium carbonate 1 *2 | | 82 | 82 | 82 | 82 | 82 | 82 | 82 | 82 | 5 | 10 | 10 | 10 | 50 | 120 |
| Calcium carbonate 2 *3 | | 0 | 0 | 0 | 0 | 0 | 0 | 0 | 0 | 0 | 0 | 0 | 0 | 0 | 0 |
| Calcium carbonate 3 *4 | | 0 | 0 | 0 | 0 | 0 | 0 | 0 | 0 | 0 | 0 | 0 | 0 | 0 | 0 |
| Calcium carbonate 4 *5 | | 0 | 0 | 0 | 0 | 0 | 0 | 0 | 0 | 0 | 0 | 0 | 0 | 0 | 0 |
| Carbon black 1 *6 | | 44 | 44 | 44 | 44 | 44 | 44 | 44 | 44 | 44 | 44 | 44 | 44 | 44 | 44 |
| Carbon black 2 *7 | | 0 | 0 | 0 | 0 | 0 | 0 | 0 | 0 | 0 | 0 | 0 | 0 | 0 | 0 |
| Carbon black 3 *8 | | 0 | 0 | 0 | 0 | 0 | 0 | 0 | 0 | 0 | 0 | 0 | 0 | 0 | 0 |
| p-tert-octylphenol-formaldehyde resin *9 | | 0 | 1 | 3 | 5 | 10 | 15 | 18 | 0 | 5 | 3 | 5 | 15 | 5 | 3 |
| p-tert-butylphenol-formaldehyde resin *10 | | 0 | 0 | 0 | 0 | 0 | 0 | 0 | 5 | 0 | 0 | 0 | 0 | 0 | 0 |
| Evaluation of film thickness stability | | Poor | Poor | Good | Excellent | Excellent | Excellent | Excellent | Good | Good | Good | Good | Good | Excellent | Excellent |
| Peel test of rubber composition layer and undegraded reinforcing member layer | Peel strength (N/25mm) | 150 | 149 | 149 | 145 | 138 | 130 | 129 | 155 | 280 | 270 | 288 | 286 | 200 | 129 |
| | Evaluation of adhesiveness | Excellent | Excellent | Excellent | Excellent | Excellent | Excellent | Excellent | Excellent | Excellent | Excellent | Excellent | Excellent | Excellent | Excellent |
| | Evaluation of peel operability | Excellent | Excellent | Excellent | Excellent | Excellent | Excellent | Excellent | Excellent | Excellent | Excellent | Excellent | Excellent | Excellent | Excellent |
| | Evaluation of rubber attachment amount | Good | Good | Good | Excellent | Excellent | Excellent | Excellent | Excellent | Excellent | Excellent | Excellent | Excellent | Excellent | Excellent |
| Peel test of rubber composition layer and degraded reinforcing member layer | Peel strength (N/25mm) | 71 | 85 | 110 | 112 | 121 | 125 | 123 | 129 | 266 | 266 | 254 | 265 | 175 | 119 |
| | Evaluation of adhesiveness | Poor | Good | Excellent | Excellent | Excellent | Excellent | Excellent | Excellent | Excellent | Excellent | Excellent | Excellent | Excellent | Excellent |
| | Evaluation of peel operability | Excellent | Excellent | Excellent | Excellent | Excellent | Excellent | Excellent | Excellent | Excellent | Excellent | Excellent | Excellent | Excellent | Excellent |
| | Evaluation of rubber attachment amount | Poor | Poor | Good | Excellent | Excellent | Excellent | Excellent | Excellent | Good | Good | Excellent | Excellent | Excellent | Excellent |

**[Table 2]**

| | | Example 13 | Example 14 | Example 15 | Example 16 | Example 17 | Example 18 | Example 19 | Example 20 | Example 21 | Example 22 | Example 23 | Example 24 | Example 25 |
|---|---|---|---|---|---|---|---|---|---|---|---|---|---|---|
| Natural rubber | | 35 | 35 | 35 | 35 | 35 | 35 | 35 | 35 | 35 | 35 | 35 | 35 | 35 |
| Styrene-butadiene rubber | | 60 | 60 | 60 | 60 | 60 | 65 | 65 | 65 | 65 | 65 | 60 | 60 | 60 |
| Reclaimed rubber *1 | Isoprene rubber | 5 | 5 | 5 | 5 | 5 | 0 | 0 | 0 | 0 | 0 | 5 | 5 | 5 |
| | Carbon black | 2.5 | 2.5 | 2.5 | 2.5 | 2.5 | 0 | 0 | 0 | 0 | 0 | 2.5 | 2.5 | 2.5 |
| | Others | 2.5 | 2.5 | 2.5 | 2.5 | 2.5 | 0 | 0 | 0 | 0 | 0 | 2.5 | 2.5 | 2.5 |
| Calcium carbonate 1 *2 | | 120 | 120 | 140 | 82 | 82 | 82 | 82 | 82 | 10 | 120 | 0 | 0 | 0 |
| Calcium carbonate 2 *3 | | 0 | 0 | 0 | 0 | 0 | 0 | 0 | 0 | 0 | 0 | 82 | 0 | 0 |
| Calcium carbonate 3 *4 | | 0 | 0 | 0 | 0 | 0 | 0 | 0 | 0 | 0 | 0 | 0 | 82 | 0 |
| Calcium carbonate 4 *5 | | 0 | 0 | 0 | 0 | 0 | 0 | 0 | 0 | 0 | 0 | 0 | 0 | 82 |
| Carbon black 1 *6 | | 44 | 44 | 44 | 0 | 0 | 44 | 44 | 44 | 44 | 44 | 44 | 44 | 44 |
| Carbon black 2 *7 | | 0 | 0 | 0 | 44 | 0 | 0 | 0 | 0 | 0 | 0 | 0 | 0 | 0 |
| Carbon black 3 *8 | | 0 | 0 | 0 | 0 | 44 | 0 | 0 | 0 | 0 | 0 | 0 | 0 | 0 |
| p-tert-octylphenol-formaldehyde resin *9 | | 5 | 15 | 5 | 3 | 3 | 3 | 5 | 10 | 5 | 5 | 5 | 5 | 5 |
| p-tert-butylphenol-formaldehyde resin *10 | | 0 | 0 | 0 | 0 | 0 | 0 | 0 | 0 | 0 | 0 | 0 | 0 | 0 |
| Evaluation of film thickness stability | | Excellent | Excellent | Excellent | Good | Good | Good | Excellent | Excellent | Good | Excellent | Excellent | Good | Excellent |
| Peel test of rubber composition layer and undegraded reinforcing member layer | Peel strength (N/25mm) | 128 | 111 | 101 | 196 | 275 | 153 | 142 | 135 | 290 | 117 | 131 | 172 | 144 |
| | Evaluation of adhesiveness | Excellent | Excellent | Excellent | Excellent | Excellent | Excellent | Excellent | Excellent | Excellent | Excellent | Excellent | Excellent | Excellent |
| | Evaluation of peel operability | Excellent | Excellent | Excellent | Excellent | Excellent | Excellent | Excellent | Excellent | Excellent | Excellent | Excellent | Excellent | Excellent |
| | Evaluation of rubber attachment amount | Excellent | Excellent | Excellent | Excellent | Excellent | Excellent | Excellent | Excellent | Excellent | Excellent | Good | Good | Excellent |
| Peel test of rubber composition layer and degraded reinforcing member layer | Peel strength (N/25mm) | 118 | 109 | 85 | 175 | 203 | 113 | 124 | 130 | 233 | 95 | 110 | 116 | 119 |
| | Evaluation of adhesiveness | Excellent | Excellent | Good | Excellent | Excellent | Excellent | Excellent | Excellent | Excellent | Good | Excellent | Excellent | Excellent |
| | Evaluation of peel operability | Excellent | Excellent | Excellent | Excellent | Excellent | Excellent | Excellent | Excellent | Excellent | Excellent | Excellent | Excellent | Excellent |
| | Evaluation of rubber attachment amount | Excellent | Excellent | Excellent | Good | Good | Excellent | Excellent | Excellent | Excellent | Excellent | Good | Good | Excellent |

| | | | | | | | | | | | | | | |
|---|---|---|---|---|---|---|---|---|---|---|---|---|---|---|
| **[0065]** *1 Reclaimed rubber ... 50 mass% of isoprene rubber, 25 mass% of carbon black, 25 mass% of others (other than rubber component, carbon black, wet silica, calcium carbonate, and dry silica) *2 Calcium carbonate 1 ... "NS#100", manufactured by Nitto Funka Kogyo K.K., average primary particle size: 2.1 µm *3 Calcium carbonate 2 ... "NS#200", manufactured by Nitto Funka Kogyo K.K., average primary particle size: 14.8 µm *4 Calcium carbonate 3 ... "SOFTON 3200", manufactured by Shiraishi Calcium Kaisha, Ltd., average primary particle size: 0.7 µm *5 Calcium carbonate 4 ... "NS#500", manufactured by Nitto Funka Kogyo K.K., average primary particle size: 4.4 µm *6 Carbon black 1 ... "SEAST V", manufactured by Tokai Carbon Co., Ltd. *7 Carbon black 2 ... "SHO-BLACK N330", manufactured by Cabot Japan K.K. *8 Carbon black 3 ... "SEAST 6", manufactured by Tokai Carbon Co., Ltd. *9 p-tert-octylphenol-formaldehyde resin ... "DUREZ 19900", manufactured by Sumitomo Durez Co., Ltd. *10 p-tert-butylphenol-formaldehyde resin ... "DUREZ 32333", manufactured by Sumitomo Durez Co., Ltd. | | | | | | | | | | | | | | |

According to Tables 1 and 2, the rubber composition of this disclosure, which is obtainable by compounding a rubber component containing a diene based rubber, a phenol based resin and a carbon black, where the compounding amount of the phenol based resin is 3 parts by mass or more per 100 parts by mass of the diene based rubber, brought a peel strength of 80 N/25mm or more, and had a large rubber amount remaining on the reinforcing member layer, in both the peel test of the layer containing the rubber composition and the undegraded reinforcing member layer and the peel test of the layer containing the rubber composition and the reinforcing member layer in environmental degradation. Therefore, it is understood that the rubber composition of this disclosure has excellent adhesiveness with undegraded reinforcing members and excellent adhesiveness with reinforcing members in environmental degradation. On the other hand, it is understood that the rubber compositions of Comparative Examples 1, 2, in which the compounding amount of the phenol based resin is less than 3 parts by mass per 100 parts by mass of the diene based rubber, has insufficient adhesiveness with reinforcing members in environmental degradation. Such fact is clarified as well from the lighter color of the peeled surface in FIG. 2B.

### INDUSTRIAL APPLICABILITY

According to this disclosure, it is possible to provide a rubber composition having excellent adhesiveness with reinforcing members, particularly reinforcing members in environmental degradation. Moreover, according to this disclosure, it is possible to provide a laminate using the aforementioned rubber composition and capable of improving durability of a rubber product, and a conveyor belt using the aforementioned laminate and having high durability.

## Claims

1. Use of a rubber composition for a conveyor belt, the rubber composition being obtainable by compounding a rubber component containing a diene based rubber, a phenol based resin, a carbon black, and calcium carbonate, wherein:
the compounding amount of the phenol based resin is 3 parts by mass or more per 100 parts by mass of the diene based rubber, and
the compounding amount of the calcium carbonate is 10 parts by mass or more and 120 parts by mass or less per 100 parts by mass of the diene based rubber.

2. The use according to claim 1, wherein:
the compounding amount of the phenol based resin in the rubber composition is 3 parts by mass or more and 15 parts by mass or less per 100 parts by mass of the diene based rubber.

3. The use according to claim 1 or 2, wherein:
the phenol based resin is an alkylphenol-formaldehyde based resin having an alkyl group with 5 or more carbon atoms on an aromatic ring.

4. The use according to claim 3, wherein:
the alkylphenol-formaldehyde based resin has the alkyl group at a para position with respect to a hydroxyl group.

5. The use according to any one of claims 1 to 4, wherein:
the rubber component in the rubber composition contains a natural rubber and a styrene-butadiene rubber.

6. The use according to claim 5, wherein:
a ratio of a compounding amount of the natural rubber to a total compounding amount of the natural rubber and the styrene-butadiene rubber in the rubber composition is 20 mass% or more and 60 mass% or less.

7. The use according to any one of claims 1 to 6, wherein:
a nitrogen adsorption BET specific surface area of the carbon black in the rubber composition is 8 m²/g or more and 100 m²/g or less.

8. The use according to any one of claims 1 to 7, wherein:
the rubber composition is arranged between a rubber member and a reinforcing member, or between reinforcing members, and is used to adhere the same.

9. Use of a laminate for a conveyor belt, the laminate being obtainable by stacking and adhering a layer containing the rubber composition as defined in any one of claims 1 to 8 and a reinforcing member layer.

10. A conveyor belt comprising the laminate as defined in claim 9.

## Patentansprüche

1. Verwendung einer Kautschukzusammensetzung für ein Förderband, wobei die Kautschukzusammensetzung durch Compoundieren einer Kautschukkomponente erhältlich ist, die einen Kautschuk auf Dienbasis, ein Harz auf Phenolbasis, einen Ruß und Calciumcarbonat enthält, wobei:
die Compoundiermenge des Harzes auf Phenolbasis 3 Masseteile oder mehr pro 100 Masseteile des Kautschuks auf Dienbasis beträgt und
die Compoundiermenge des Calciumcarbonats 10 Masseteile oder mehr und 120 Masseteile oder weniger pro 100 Masseteile des Kautschuks auf Dienbasis beträgt.

2. Verwendung nach Anspruch 1, wobei:
die Compoundiermenge des Harzes auf Phenolbasis in der Kautschukzusammensetzung 3 Masseteile oder mehr und 15 Masseteile oder weniger pro 100 Masseteile des Kautschuks auf Dienbasis beträgt.

3. Verwendung nach Anspruch 1 oder 2, wobei:
das Harz auf Phenolbasis ein Harz auf Alkylphenol-Formaldehydbasis ist, das eine Alkylgruppe mit 5 oder mehr Kohlenstoffatomen an einem aromatischen Ring aufweist.

4. Verwendung nach Anspruch 3, wobei:
das Harz auf Alkylphenol-Formaldehydbasis die Alkylgruppe an einer Para-Position mit Bezug auf eine Hydroxylgruppe aufweist.

5. Verwendung nach irgendeinem der Ansprüche 1 bis 4, wobei:
die Kautschukkomponente in der Kautschukzusammensetzung einen natürlichen Kautschuk und einen Styrol-Butadien-Kautschuk enthält.

6. Verwendung nach Anspruch 5, wobei:
ein Verhältnis einer Compoundiermenge des natürlichen Kautschuks zu einer Gesamtcompoundiermenge des natürlichen Kautschuks und des Styrol-Butadien-Kautschuks in der Kautschukzusammensetzung 20 Masse-% oder mehr und 60 Masse-% oder weniger beträgt.

7. Verwendung nach irgendeinem der Ansprüche 1 bis 6, wobei:
ein BET-spezifischer Stickstoffadsorptionsoberflächenbereich des Rußes in der Kautschukzusammensetzung 8 m²/g oder mehr und 100 m²/g oder weniger beträgt.

8. Verwendung nach irgendeinem der Ansprüche 1 bis 7, wobei:
die Kautschukzusammensetzung zwischen einem Kautschukelement und einem Verstärkungselement oder zwischen Verstärkungselementen angeordnet ist und zum Befestigen derselben verwendet wird.

9. Verwendung eines Laminats für ein Förderband, wobei das Laminat durch Stapeln und Befestigen einer Schicht erhältlich ist, die die Kautschukzusammensetzung, wie in irgendeinem der Ansprüche 1 bis 8 definiert, und eine Verstärkungselementschicht enthält.

10. Förderband umfassend das Laminat wie in Anspruch 9 definiert.

## Revendications

1. Utilisation d'une composition de caoutchouc pour une bande transporteuse, la composition de caoutchouc pouvant être obtenue par malaxage d'un constituant de caoutchouc contenant un caoutchouc à base de diène, une résine à base de phénol, un noir de carbone, et du carbonate de calcium:
la quantité de malaxage de la résine à base de phénol étant de 3 parties en masse ou plus pour 100 parties en masse du caoutchouc à base de diène, et
la quantité de malaxage du carbonate de calcium étant de 10 parties en masse ou plus et 120 parties en masse ou moins pour 100 parties en masse du caoutchouc à base de diène.

2. Utilisation selon la revendication 1:
la quantité de malaxage de la résine à base de phénol dans la composition de caoutchouc étant de 3 parties en masse ou plus et de 15 parties en masse ou moins pour 100 parties en masse du caoutchouc à base de diène.

3. Utilisation selon la revendication 1 ou 2:
la résine à base de phénol étant une résine à base d'alkylphénol-formaldéhyde ayant un groupe alkyle ayant 5 atomes de carbone ou plus sur un cycle aromatique.

4. Utilisation selon la revendication 3:
la résine à base d'alkylphénol-formaldéhyde ayant le groupe alkyle à la position para par rapport à un groupe hydroxyle.

5. Utilisation selon l'une quelconque des revendications 1 à 4:
le constituant de caoutchouc dans la composition de caoutchouc contenant un caoutchouc d'origine naturelle et un caoutchouc de styrène-butadiène.

6. Utilisation selon la revendication 5:
un rapport d'une quantité de malaxage du caoutchouc d'origine naturelle à une quantité de malaxage totale du caoutchouc d'origine naturelle et du caoutchouc de styrène-butadiène dans la composition de caoutchouc étant de 20 % en masse ou plus et 60 % en masse ou moins.

7. Utilisation selon l'une quelconque des revendications 1 à 6:
une surface spécifique B.E.T. d'adsorption d'azote du noir de carbone dans la composition de caoutchouc étant de 8 m²/g ou plus et de 100 m²/g ou moins.

8. Utilisation selon l'une quelconque des revendications 1 à 7:
la composition de caoutchouc étant disposée entre un élément de caoutchouc et un élément de renfort, ou entre des éléments de renfort, et étant utilisée pour les faire adhérer.

9. Utilisation d'un stratifié pour une bande transporteuse, le stratifié pouvant être obtenu par empilement et adhésion d'une couche contenant la composition de caoutchouc telle que définie selon l'une quelconque des revendications 1 à 8 et une couche d'élément de renfort.

10. Bande transporteuse comprenant le stratifié tel que défini selon la revendication 9.
